# EUROPÄISCHE PATENTSCHRIFT

(11) **EP 2 767 379 B1**
(45) Veröffentlichungstag und Bekanntmachung des Hinweises auf die Patenterteilung: **20.02.2019**
(21) Anmeldenummer: 13005824.1
(22) Anmeldetag: 13.12.2013
(51) Int. Cl.: B29C 44/12, B29C 44/38, B29C 44/56, B29L 31/30, B29L 9/00

(54) **Verfahren zum Herstellen eines geschäumten Sandwichkerns, sowie Verwendung des Verfahrens**
Method for manufacturing a foamed sandwich core and use of the method
Procédé de fabrication d'une âme de sandwich en matériau expansé et utilisation du procédé

(30) Priorität: 14.02.2013 DE 102013002591
(43) Veröffentlichungstag der Anmeldung: 20.08.2014
(73) Patentinhaber: AUDI AG, 85045 Ingolstadt (DE)
(72) Erfinder: Milosev, Zika, 74172 Neckarsulm (DE); Schütze, Tobias, 74078 Heilbronn (DE); Roquette, David, 70563 Stuttgart (DE)

(56) Entgegenhaltungen:
- WO-A2-2008/056246
- DE-C1- 19 934 490
- JP-A- S57 157 736
- US-A1- 2001 021 457
- US-A1- 2004 075 299
- US-A1- 2011 262 735

## Beschreibung

Die Erfindung betrifft ein Verfahren zum Herstellen eines geschäumten Sandwichkerns für ein Bauteil in Sandwichbauweise.

Die Erfindung betrifft ferner eine bevorzugte Anwendung des Verfahrens zum Herstellen eines Bauteils in Sandwichbauweise.

Eine Sandwichbauweise bezeichnet einen Werkstoffverbund der aus Decklagen bzw. Deckschichten und aus einem dazwischen befindlichen zumeist relativ leichten Sandwichkern, wobei es sich im Rahmen der Erfindung um einen aus Schaummaterial gebildeten Sandwichkern handelt (nachfolgend als geschäumter Sandwichkern bezeichnet), besteht. Da die Sandwichbauweise ein hohes Leichtbaupotential bietet, werden zunehmend auch unterschiedlichste Kraftfahrzeugbauteile in Sandwichbauweise ausgeführt.

Zur Herstellung eines Bauteils in Sandwichbauweise sind aus dem Stand der Technik verschiedene Verfahrensweisen bekannt. Eine gängige Verfahrensweise sieht vor, dass ein schäumfähiges Ausgangsmaterial in die Kavität eines formgebenden Werkzeugs eingebracht und danach unter Einwirkung von Druck und Temperatur kontrolliert aufgeschäumt wird (so genanntes "direktes Schäumen"). Diese Vorgehensweise ist jedoch nicht für großvolumige und/oder dickwandige Bauteile geeignet. Das Herstellen großvolumiger und/oder dickwandiger Bauteile erfolgt daher bislang durch Fügen (bspw. durch Verkleben) als Halbzeug bereitgestellter Schaummaterialien, anschließender Formgebung (bspw. durch Fräsbearbeitung und/oder Umformung) und abschließendes Aufbringen der Deckschichten. Dies ist mit hohen Aufwänden und Kosten verbunden.

Die US 2004/0075299 A1 beschreibt eine Anordnung aus mehreren Materialien, bei der mehrere Massen eines ersten expandierbaren Materials und mehrere Massen eines zweiten expandierbaren Materials zwischen zwei Außenlagen angeordnet werden. Die Massen des ersten Materials und des zweiten Materials können in unterschiedlichen Formen und Konfigurationen zwischen den Auslagen angeordnet werden. Die Aktivierung erfolgt durch Erwärmung.

Die US2001/0021457 A1 beschreibt ein Verfahren gemäß dem Oberbegriff des Anspruchs 1.

Der Erfindung liegt die Aufgabe zugrunde, eine Möglichkeit aufzuzeigen, wie bei der Herstellung eines großvolumigen und/oder dickwandigen Sandwichkerns homogene Werkstoffeigenschaften erreicht werden können.

Diese Aufgabe wird gelöst durch das erfindungsgemäße Verfahren nach Anspruch 1, sowie durch die Verwendung nach Anspruch 4. Bevorzugte Weiterbildungen und Ausgestaltungen ergeben sich analog für alle Erfindungsgegenstände sowohl aus den abhängigen Ansprüchen als auch aus den nachfolgenden Erläuterungen.

Das offenbarte Verfahren zum Herstellen eines geschäumten Sandwichkerns für ein Bauteil in Sandwichbauweise, wobei es sich insbesondere um ein Kraftfahrzeugbauteil handelt, sieht vor, dass ein schäumfähiges Ausgangsmaterial in die Kavität eines formgebenden Werkzeugs eingebracht und danach unter Einwirkung von Druck und/oder Temperatur kontrolliert aufgeschäumt wird, wobei die erforderliche Gesamtmenge an schäumfähigem Ausgangsmaterial portioniert wird und diese portionierten Mengen bzw. Portionen an unterschiedlichen, und zwar insbesondere vorab definierten, Stellen in der Kavität des formgebenden Werkzeugs angeordnet bzw. positioniert werden.

Bei der sich anschließenden Aufschäumung wird die Kavität des Werkzeugs ausgehend von mehreren verteilt angeordneten Ursprungsstellen gleichmäßig ausgefüllt. Der auf diese Weise hergestellte geschäumte Sandwichkern zeichnet sich durch homogene Werkstoffeigenschaften aus, womit sowohl eine über dem Volumen gleichmäßig verteilte Dichte und Porengröße als auch eine einheitliche Festigkeit und Elastizität gemeint sein kann. Diese Eigenschaften lassen sich gezielt einstellen und reproduzieren. Das vorgeschlagene Verfahren eignet sich somit insbesondere für die schnelle und kostengünstige Herstellung von geschäumten Sandwichkernen für großvolumige und/oder dickwandige Bauteile in Sandwichbauweise.

Ein auf diese Weise hergestellter geschäumter Sandwichkern kann bspw. durch anschließende Formgebung (z. B. durch Fräsbearbeitung und/oder Umformung) in die zur weiteren Herstellung eines Bauteils erforderliche Endkontur gebracht werden. Bevorzugt ist jedoch vorgesehen, dass durch entsprechende Ausgestaltung der Kavität der Sandwichkern (im Hinblick auf das im Weiteren herzustellende Bauteil) bereits endkonturnah hergestellt wird.

Die einzelnen Portionen des schäumfähigen Ausgangsmaterials werden vertikal verteilt in der Kavität angeordnet. Hierzu werden in verschiedenen Höhenlagen Folien, insbesondere Klebefolien, und/oder Netze in die Kavität eingebracht, auf denen Portionen, quasi vertikal übereinanderliegend, angeordnet werden können. Die Folien, Netze oder dergleichen werden beim Aufschäumen umschäumt und dienen der Verstärkung des hergestellten geschäumten Sandwichkerns. Alternativ können die einzelnen Portionen auch in die Kavität eingehängt werden, derart, dass sich diese in unterschiedlichen Höhenpositionen befinden.

Das schäumfähige Ausgangsmaterial kann als Flüssigkeit, als Pulver, als Granulat und/oder als Festkörper bereitgestellt werden. Bevorzugt handelt es sich insbesondere um ein synthetisches Polymer. Der Aufschäumvorgang kann mit Hilfe eines Aktivators und durch Einwirkung von Druck und Temperatur kontrolliert in Gang gesetzt werden. Das synthetische Polymer kann in seinem Ausgangszustand bereits mit einem reaktionsfähigen Aktivator versehen sein.

Bevorzugt ist vorgesehen, dass die maximale Wanddicke des herzustellenden geschäumten Sandwichkerns (gemessen an der dicksten Stelle) mehr als 100 mm, bevorzugt mehr als 150 mm, besonders bevorzugt mehr als 200 mm und insbesondere mehr als 300 mm oder mehr als 400 mm beträgt. Ein Sandwichkern und/oder ein Bauteil in Sandwichbauweise mit einer solchen Wanddicke kann gemäß den vorausgehenden Erläuterungen als dickwandig bezeichnet werden.

Ein mögliches Verfahren zum Herstellen eines Bauteils in Sandwichbauweise, wobei es sich insbesondere um ein Kraftfahrzeugbauteil handelt, sieht ein Auflaminieren oder sonstiges Aufbringen von Deckschichten (in an und für sich bekannter Weise) auf einen mit einem erfindungsgemäßen Verfahren hergestellten geschäumten Sandwichkern vor. Bei diesen Deckschichten kann es sich bspw. um Kunststoff-, Kunststoffverbund- und/oder Metallfolien (gegebenenfalls auch Platten) handeln. Ein Kunststoffverbund ist insbesondere ein faserverstärkter Kunststoff, wie bspw. CFK oder GFK.

Ein anderes Verfahren zum Herstellen eines Bauteils in Sandwichbauweise umfasst das Ausführen eines erfindungsgemäßen Verfahrens zum Herstellen eines geschäumten Sandwichkerns, wobei zu Beginn in die Kavität des formgebenden Werkzeugs zusätzlich wenigstens eine Deckschicht (bzw. ein die Deckschicht ausbildendes Halbzeug oder dergleichen) eingelegt wird. Beim Aufschäumen verbindet sich das den Sandwichkern bildende Material dauerhaft mit dieser Deckschicht.

Die Erfindung wird nachfolgend beispielhaft und in nicht einschränkender Weise anhand der Figuren näher erläutert. Die in den Figuren gezeigten und/oder nachfolgend erläuterten Merkmale können, unabhängig von konkreten Merkmalskombinationen, allgemeine Merkmale der Erfindung sein.
- Fig. 1: veranschaulicht in einer schematischen Schnittansicht eine erste erfindungsgemäße Vorgehensweise zum Herstellen eines geschäumten Sandwichkerns.
- Fig. 2: veranschaulicht in einer schematischen Schnittansicht eine zweite erfindungsgemäße Vorgehensweise zum Herstellen eines geschäumten Sandwichkerns.

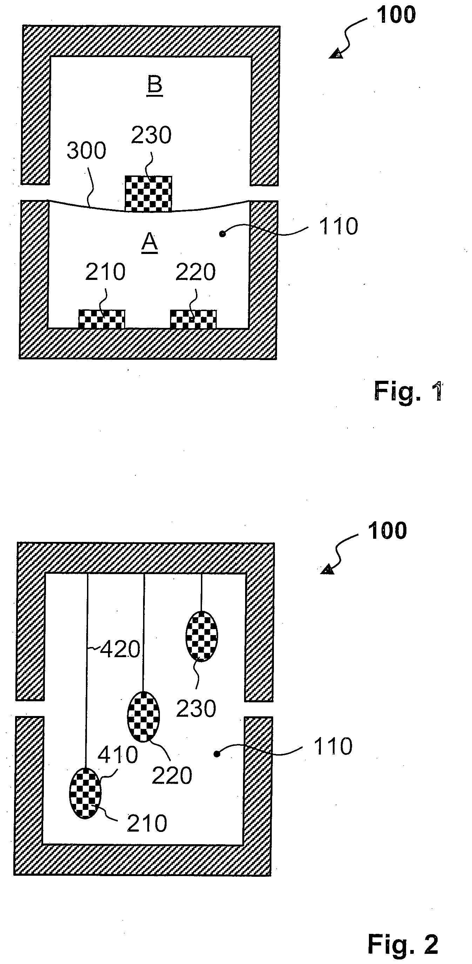

Fig. 1 und Fig. 2 zeigen ein mehrteiliges formgebendes Werkzeug 100 zum Herstellen eines geschäumten Sandwichkerns. Hierzu wird ein schäumfähiges bzw. expandierbares Ausgangsmaterial, wobei es sich insbesondere um ein Polymer handelt, in die Kavität 110 (Formhohlraum) des Werkzeugs 100 eingebracht und nach Schließen des Werkzeugs 100 unter Einwirkung von Druck und Temperatur kontrolliert aufgeschäumt.

Erfindungsgemäß ist vorgesehen, dass die erforderliche Gesamtmenge an schäumfähigem Ausgangsmaterial portioniert wird, d. h. in gleich große oder unterschiedlich große Portionen aufgeteilt wird, und dann in Form einzelner Portionen 210, 220 und 230 an unterschiedlichen Stellen in der Kavität 110 des formgebenden Werkzeugs 100 angeordnet wird. Die Anzahl von drei Portionen und deren Anordnung ist nur beispielhaft und dient der Veranschaulichung. Das portionierte Ausgangsmaterial kann als Flüssigkeit, Pulver, Granulat und/oder Festkörper (bspw. Blockmaterial) zur Verfügung gestellt werden. Die Merkmale der nachfolgend erläuterten Vorgehensweisen können im Rahmen der Erfindung auch miteinander kombiniert werden.

Bei der in Fig. 1 gezeigten Vorgehensweise sind drei Portionen 210, 220 und 230 vorgesehen, die nebeneinander und übereinander in der Kavität 110 angeordnet sind. Die unteren Portionen 210 und 220 liegen auf dem Boden der Kavität 110 auf. Die obere Portion 230 liegt auf einer auf halber Höhe angeordneten Folie 300 auf. Beim Aufschäumvorgang wird mit dem in den Portionen 210 und 220 enthaltenen Ausgangsmaterial der untere Kavitätsbereich A und mit dem in der Portion 230 enthaltenen Ausgangsmaterial der obere Kavitätsbereich B ausgeschäumt. Das Aufschäumen der Portionen 210, 220 und 230 erfolgt bevorzugt gleichzeitig, kann aber auch nacheinander erfolgen.

Der auf diese Weise hergestellte geschäumte Sandwichkern zeichnet sich trotz eventueller Großvolumigkeit und/oder Dickwandigkeit durch homogene Werkstoffeigenschaften aus, wie obenstehend erläutert. Die Folie 300 verbleibt im hergestellten Sandwichkern und bildet eine Verstärkung. Anstelle der Folie 300 kann auch ein Netz oder eine andere geeignete Anordnungsmöglichkeit vorgesehen sein.

Bei der in Fig. 2 gezeigten Vorgehensweise sind ebenfalls drei Portionen 210, 220 und 230 vorgesehen, die nebeneinander jedoch in unterschiedlichen Höhenpositionen eingehängt sind. Hierzu ist das portionierte Ausgangsmaterial bspw. in Säckchen oder Tüten 410 (oder dergleichen) verpackt und mit Fäden oder Schnüren 420 (oder dergleichen) aufgehängt (wobei auch andere Befestigungsmöglichkeiten denkbar sind). Die Säckchen oder Tüten 410 können beim Aufschäumen aufplatzen und hinterlassen unbedenkliche Rückstände im hergestellten Sandwichkern. Eine besonders bevorzugte Variante sieht vor, dass die Säckchen bzw. Tüten 410, und gegebenenfalls auch die Fäden bzw. Schnüre 420, aus einem für den Aufschäumvorgang funktionalen Material gebildet sind und somit keine Rückstände hinterlassen. Bspw. können diese aus einem Material gebildet sein, welches als Aktivator für den Aufschäumvorgang dient.

In der Kavität 110 können ferner so genannte Inserts positioniert werden. Diese, bspw. aus Metall gebildeten, Inserts werden beim Aufschäumen umschäumt und dienen dann als Krafteinleitungselemente am hergestellten Sandwichkern. Besonders bevorzugt ist vorgesehen, dass über diese Inserts auch eine Positionierung bzw. Anordnung der Portionen in der Kavität 110 erfolgt.

Die Erfindung ermöglicht gegenüber den aus dem Stand der Technik bekannten Vorgehensweise eine Reduzierung von Aufwänden und Fertigungskosten bei der Herstellung von geschäumten Sandwichkernen durch Verringerung von Prozessschritten. Durch Einlegen von Deckschichten in die Kavität 110 und insbesondere durch Auskleiden der Kavität 110 mit Deckschichten (oder gegebenenfalls auch nur mit einer, bspw. schalenartig ausgebildeten, Deckschicht) können mit dem Werkzeug 100 auch Bauteile in Sandwichbauweise mit einem geschäumten Sandwichkern hergestellt werden. Die Erfindung ermöglich also auch die Herstellung großvolumiger und/oder dickwandiger Bauteile in Sandwichbauweise, insbesondere mit einer komplexen Formgebung, mit nur einem wesentlichen Herstellungsschritt.

## Patentansprüche

1. Verfahren zum Herstellen eines geschäumten Sandwichkerns für ein Bauteil in Sandwichbauweise, wobei es sich insbesondere um ein Kraftfahrzeugbauteil handelt, bei dem ein schäumfähiges Ausgangsmaterial in die Kavität (110) eines formgebenden Werkzeugs (100) eingebracht und danach unter Einwirkung von Druck und/oder Temperatur kontrolliert aufgeschäumt wird, wobei die erforderliche Gesamtmenge an schäumfähigem Ausgangsmaterial portioniert wird und die einzelnen Portionen (210, 220, 230) vertikal verteilt an unterschiedlichen Stellen in der Kavität (110) des formgebenden Werkzeugs (100) angeordnet werden, **dadurch gekennzeichnet, dass** in verschiedenen Höhenlagen Folien (300) und/oder Netze in die Kavität (110) eingebracht werden, auf denen die Portionen (230) angeordnet werden, oder wozu die Portionen (210, 220, 230) in unterschiedlichen Höhenpositionen in die Kavität (110) eingehängt werden.

2. Verfahren nach Anspruch 1, **dadurch gekennzeichnet, dass** es sich bei dem schäumfähigen Ausgangsmaterial um ein synthetisches Polymer handelt.

3. Verfahren nach einem der vorausgehenden Ansprüche, **dadurch gekennzeichnet, dass** die maximale Wanddicke des herzustellenden geschäumten Sandwichkerns mehr als 100 mm, bevorzugt mehr als 150 mm, besonders bevorzugt mehr als 200 mm und insbesondere mehr als 300 mm oder mehr als 400 mm beträgt.

4. Verwendung eines Verfahrens zum Herstellen eines geschäumten Sandwichkerns für ein Bauteil in Sandwichbauweise gemäß einem der vorausgehenden Ansprüche 1 bis 3 zum Herstellen eines Bauteils, insbesondere eines Kraftfahrzeugbauteils, in Sandwichbauweise, wobei in die Kavität (110) des formgebenden Werkzeugs (100) zusätzlich wenigstens eine Deckschicht eingelegt wird.

## Claims

1. Method for producing a foamed sandwich core for a sandwich-structured component, in particular a motor vehicle component, in which a foamable starting material is introduced into the cavity (110) of a shaping tool (100) and is then foamed in a controlled manner under the action of pressure and/or temperature, wherein the required total amount of foamable starting material is portioned and the individual portions (210, 220, 230) are arranged vertically distributed at different locations in the cavity (110) of the shaping tool (100), at different heights, and the individual portions (210, 220, 230) are arranged vertically distributed at different positions in the cavity (110) of the shaping tool (100), **characterised in that** foils (300) and/or nets are introduced into the cavity (110), on which the portions (230) are arranged, or for which purpose the portions (210, 220, 230) are suspended in different height positions in the cavity (110).

2. Process according to claim 1, **characterised in that** the foamable starting material is a synthetic polymer.

3. Method according to any one of the preceding claims, **characterised in that** the maximum wall thickness of the foamed sandwich core to be produced is more than 100 mm, preferably more than 150 mm, particularly preferably more than 200 mm and in particular more than 300 mm or more than 400 mm.

4. Use of a process for manufacturing a foamed sandwich core for a sandwich construction component according to one of the preceding claims 1 to 3 for producing a component, in particular a motor vehicle component, in sandwich construction, wherein at least one cover layer is additionally inserted into the cavity (110) of the shaping tool (100).

## Revendications

1. Procédé de fabrication d'une âme de sandwich en matériau expansé pour un composant à structure sandwich, dans lequel il s'agit en particulier d'un composant de véhicule automobile, dans lequel un matériau de départ expansible est introduit dans la cavité (110) d'un outil de moulage (100) et ensuite sous l'effet de pression et/ou de température est expansé de manière contrôlée, dans lequel la quantité totale nécessaire de matériau de départ expansible est portionnée et les portions individuelles (210, 220, 230) sont agencées de manière répartie verticalement à différents endroits dans la cavité (110) de l'outil de moulage (100), **caractérisé en ce que** des films (300) et/ou réseaux sont introduits dans la cavité (110) à différentes hauteurs, sur lesquels les portions (230) sont agencées, ou pour lesquels les portions (210, 220, 230) sont accrochées à différentes hauteurs dans la cavité (110).

2. Procédé selon la revendication 1, **caractérisé en ce que** le matériau de départ expansible est un polymère synthétique.

3. Procédé selon l'une quelconque des revendications précédentes, **caractérisé en ce que** l'épaisseur de paroi maximum de l'âme de sandwich en matériau expansé à fabriquer est supérieure à 100 mm, de manière plus préférée supérieure à 150 mm, le plus préférentiellement supérieure à 200 mm et en particulier supérieure à 300 mm ou supérieure à 400 mm.

4. Utilisation d'un procédé de fabrication d'une âme de sandwich en matériau expansé pour un composant à structure sandwich selon l'une quelconque des revendications précédentes 1 à 3 pour la fabrication d'un composant, en particulier d'un composant de véhicule automobile, à structure sandwich, dans lequel au moins une couche de revêtement est en outre insérée dans la cavité (110) de l'outil de moulage (100).
